# EUROPEAN PATENT APPLICATION

(11) **EP 4 738 579 A1**
(43) Date of publication of application: **06.05.2026**
(21) Application number: 24831998.0
(22) Date of filing: 26.06.2024
(51) Int. Cl.: H01M 50/264, H01G 11/10, H01M 50/209, H01M 50/244, H01M 50/262

(54) **POWER STORAGE DEVICE**

(30) Priority: 28.06.2023 JP 2023105700
(71) Applicant: GS Yuasa International Ltd., Kisshoin, Minami-ku, Kyoto-shi, Kyoto 601-8520 (JP)
(72) Inventor: FUJIKURA, Ryohei, Kyoto-shi, Kyoto 601-8520 (JP)
(74) Representative: Grünecker Patent- und Rechtsanwälte PartG mbB
(86) International application number: PCT/JP2024/023184
(87) International publication number: WO 2025/005139

(57) **Abstract**

An energy storage apparatus according to the present invention includes: a plurality of energy storage devices aligned in a first direction; an end plate located at an end portion of the plurality of energy storage devices in the first direction; and a side plate which extends in the first direction and joins with the end plate, in which the side plate includes: a first part which extends in the first direction; a second part which extends from the first part so as to cover the end plate and is fixed to the end plate; and a third part which extends from the second part in the first direction along an installation surface of the energy storage apparatus and is fixed to the installation surface.

## Description

### TECHNICAL FIELD

The present invention relates to an energy storage apparatus.

### BACKGROUND ART

An energy storage apparatus of Patent Literature 1 includes a plurality of energy storage devices, a pair of end plates, and a pair of side plates. The plurality of energy storage devices are aligned in one direction, and the end plates are located at both ends of the plurality of energy storage devices. The pair of side plates are located in a direction in which the energy storage devices are aligned such that the energy storage devices are interposed therebetween. Each of both ends of the side plates is joined to the end plate. Thus, the plurality of energy storage devices are fixed by the side plates and the end plates. In the above-described energy storage apparatus, a portion of the end plate is extended to an installation surface, and the extended portion is fixed to the installation surface by means of a bolt.

### CITATION LIST

### Patent Literature

Patent Literature 1: JP2020-30915 A

### DISCLOSURE OF INVENTION

### PROBLEMS TO BE SOLVED BY THE INVENTION

Incidentally, the energy storage device swells due to repetition of charge and discharge during its use. Consequently, when the energy storage apparatus is used, a force acts on the end plate due to the swelling of the energy storage devices in a direction in which the energy storage devices are aligned. In the energy storage apparatus of Patent Literature 1, the end plate is fixed to the installation surface. Therefore, when the end plate is deformed due to the swelling of the energy storage device, a force may also act on a portion where the end plate and the installation surface are fixed. This force may present a problem in the installation state, such as the bolt may be damaged. An object of the present invention is to provide an energy storage apparatus capable of suppressing occurrence of a problem in the installation state when the energy storage device swells.

### MEANS FOR SOLVING THE PROBLEMS

An energy storage device according to the present invention includes: a plurality of energy storage devices aligned in a first direction; an end plate located at an end portion of the plurality of energy storage devices in the first direction; and a side plate located at an end portion of the plurality of energy storage devices in a second direction intersecting the first direction, in which the end plate includes an end plate connecting portion connected to the side plate, and the side plate includes: a first part which extends in the first direction; a second part which extends from the first part in the second direction intersecting the first direction and is connected to the end plate connecting portion; and a third part which extends from the second part in the first direction along an installation surface of the energy storage apparatus and is fixed to the installation surface.

### EFFECT OF THE INVENTION

According to the energy storage apparatus of the present invention, it is possible to suppress occurrence of a problem in the installation state when the energy storage device swells.

### BRIEF DESCRIPTION OF DRAWINGS

[FIG. 1] FIG. 1 is a perspective view showing an outer appearance of an energy storage apparatus according to one embodiment of the present invention.
[FIG. 2] FIG. 2 is a perspective view of an end plate used in the energy storage apparatus of FIG. 1.
[FIG. 3] FIG. 3 is a perspective view of a side plate used in the energy storage apparatus of FIG. 1.
[FIG. 4] FIG. 4 is a front view of the energy storage apparatus of FIG. 1 as seen from a front side.
[FIG. 5] FIG. 5 is a front view of another example of the energy storage apparatus as seen from the front side.

### DESCRIPTION OF EMBODIMENTS

First, an outline of an energy storage apparatus disclosed in the present specification will be described.
(1) An energy storage apparatus according to one embodiment of the present invention includes: a plurality of energy storage devices aligned in a first direction; an end plate located at an end portion of the plurality of energy storage devices in the first direction; and a side plate located at an end portion of the plurality of energy storage devices in a second direction intersecting the first direction, in which the end plate includes an end plate connecting portion connected to the side plate, and the side plate includes: a first part which extends in the first direction; a second part which extends from the first part in the second direction and is connected to the end plate connecting portion; and a third part which extends from the second part in the first direction along an installation surface of the energy storage apparatus and is fixed to the installation surface.
   According to the energy storage apparatus of one embodiment of the present invention, not the end plate but the third part extending from the side plate and the installation surface are fixed by using, for example, a bolt. Consequently, a force received by the end plate is prevented from directly acting on the third part. Therefore, it is possible to prevent the bolt for fixing the third part and the installation surface from being damaged. In other words, it is possible to suppress occurrence of a problem in the installation state of the energy storage apparatus when the energy storage device swells.
(2) In the energy storage apparatus described in (1) above, the side plate may be formed of a single sheet of plate material, and the first part, the second part, and the third part may be formed by bending the plate material.
   According to the energy storage apparatus described in (2) above, the side plate can be easily manufactured.
(3) In the energy storage apparatus described in (1) or (2) above, a long hole into which a fixing member, which is for fixing the installation surface and the third part, is inserted may be formed in the third part.
   According to the energy storage apparatus described in (3) above, when the fixing member is inserted into the long hole of the third part to fix the third part and the installation surface, a position of the fixing member can be adjusted within the long hole. Therefore, even if a dimensional tolerance of a fixing position of the third part is increased, the third part can be fixed to the installation surface by absorbing the tolerance.
(4) In the energy storage apparatus described in any one of (1) to (3) above, the third part may be provided near the first part in the second direction.
   Since the energy storage device swells particularly at a vicinity of the center thereof, a vicinity of the center of the end plate particularly receives a force when the energy storage device swells. According to the energy storage apparatus described in (4) above, when the energy storage device swells, if the third part is provided near the first part, that is, at a position distant from the vicinity of the center of the end plate, the third part is less likely to be affected by the force received by the end plate. By virtue of this feature, it is possible to reduce the influence of the swelling of the energy storage device exerted on the strength of fixing between the third part and the installation surface.
(5) In the energy storage apparatus described in any one of (1) to (4) above, the end plate may include a raised portion which is located adjacent to the end plate connecting portion, and a thickness of the raised portion may be greater than a thickness of the end plate connecting portion in the first direction.

According to the energy storage apparatus described in (5) above, the end plate increases its thickness in the first direction at a part which receives the force due to the swelling of the energy storage device, and thus, deformation of the end plate can be suppressed.

### <1. Embodiment of Energy Storage Apparatus 100>

In the following, an embodiment of an energy storage apparatus 100 according to the present invention will be described with reference to the drawings. Numerical values, shapes, materials, constituent elements, positions of arrangement and forms of connection of the constituent elements, and the like, which are indicated in the following embodiment(s) and modification(s) thereof are merely examples, and are not intended to limit the present invention. Each of the drawings is a schematic view, and dimensions and the like are not necessarily strictly illustrated. In the drawings, same or similar constituent elements are assigned a same reference numeral.

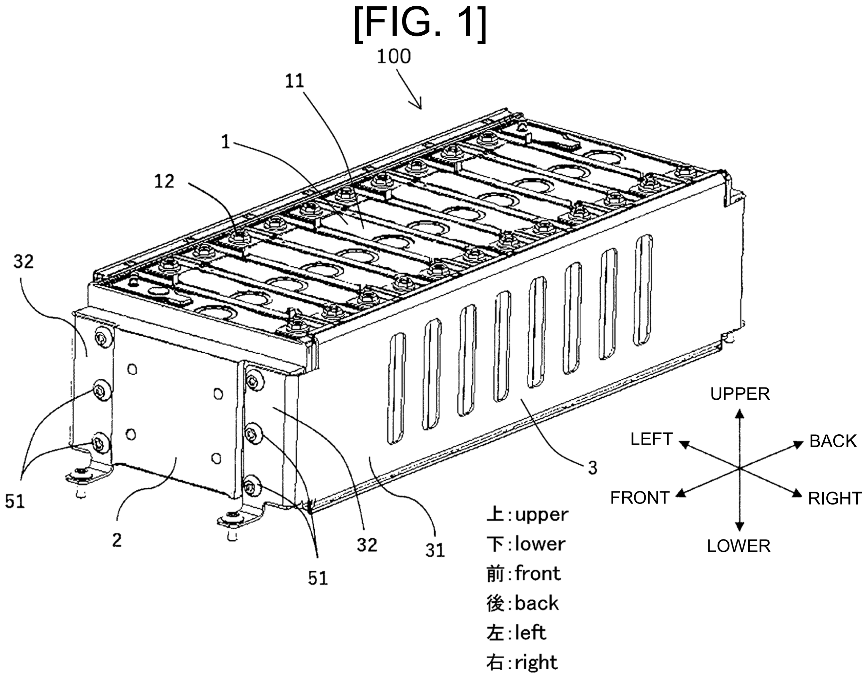

In the following description and the drawings, for convenience of explanation, the embodiment will be described with reference to directions indicated in FIGS. 1 to 4. A direction in which energy storage devices 1 are aligned, or in other words, a direction in which a pair of end plates are opposed to each other, is defined as a front-back direction. A direction in which pair of external terminals of the energy storage device are aligned, or in other words, a direction in which a pair of side plates are opposed to each other, is defined as a left-right direction. A direction in which the external terminal of the energy storage device protrudes, or in other words, a direction intersecting the front-back direction and the left-right direction, is defined as an upper-lower direction. The front-back direction, the left-right direction, and the upper-lower direction mentioned above are directions intersecting each other (orthogonal to each other in the present embodiment). However, these directions are set for convenience of explanation, and do not limit the present invention. In the following description, the front-back direction will also be referred to as a first direction. The left-right direction will also be referred to as a second direction. The upper-lower direction will also be referred to as a third direction.

Expressions indicating relative directions or postures, such as parallel and orthogonal, include cases where the directions or postures are not parallel or orthogonal in a strict sense. Two directions being orthogonal to each other means not only that the two directions are completely orthogonal to each other, but also that the two directions are substantially orthogonal to each other, so that the two directions crossing each other at an angle deviated from 90 degrees by several degrees is also included in the scope.

### <2. Outline of Energy Storage Apparatus 100>

FIG. 1 is a perspective view of the energy storage apparatus 100 of the present embodiment. As illustrated in FIG. 1, the energy storage apparatus 100 includes: a plurality of energy storage devices 1 aligned in the front-back direction (first direction); end plates 2 located at both ends of the plurality of energy storage devices 1 in the front-back direction; and side plates 3 sandwiching the plurality of energy storage devices 1 from both sides in the left-right direction (second direction) which is orthogonal to the front-back direction. That is, the energy storage apparatus 100 includes the end plates 2 located at the both ends of the plurality of energy storage devices 1 in the direction in which the plurality of energy storage devices 1 are aligned, and the side plates 3 sandwiching the plurality of energy storage devices 1 in the direction orthogonal to the direction in which the plurality of energy storage devices 1 are aligned. Apart from the above-described configurations, although the energy storage apparatus 100 includes a spacer located adjacent to the energy storage device 1, an end spacer located adjacent to the end plate, a bus bar connecting the adjacently located energy storage devices 1, and an insulating member located adjacent to the side plate, detailed description thereof will be omitted. Each member will be described below.

### <3. Energy Storage Device>

Each of the energy storage devices 1 is constituted of a primary battery, a secondary battery, a capacitor, or the like. In the present embodiment, the energy storage device 1 which is constituted of a chargeable and dischargeable non-aqueous electrolyte secondary battery will be given as an example. More specifically, each of the energy storage devices 1 is a lithium-ion secondary battery utilizing electron transfer which occurs as transfer of lithium ions takes place.

Each of the energy storage devices 1 includes an electrode body, a case 11 in which the electrode body is accommodated together with an electrolytic solution, and a pair of external terminals 12 at least a part of which protrudes to an outer side of the case 11 in the upper-lower direction. The external terminals 12 are provided as a pair in the left-right direction, which is a width direction, of the energy storage device 1.

The case 11 is formed in a rectangular parallelepiped shape and includes a case main body having an opening on an upper side in the upper-lower direction, and a plate-like lid body which closes the opening of the case main body. The pair of external terminals 12 are respectively located in the vicinity of both ends of the lid body in the left-right direction. The case 11 is formed in a flat rectangular parallelepiped shape having a long length in the left-right direction and the upper-lower direction, and a short length in the front-back direction. The energy storage devices 1 are aligned in the front-back direction such that surfaces thereof in the front-back direction are opposed to each other.

### <4. End Plate>

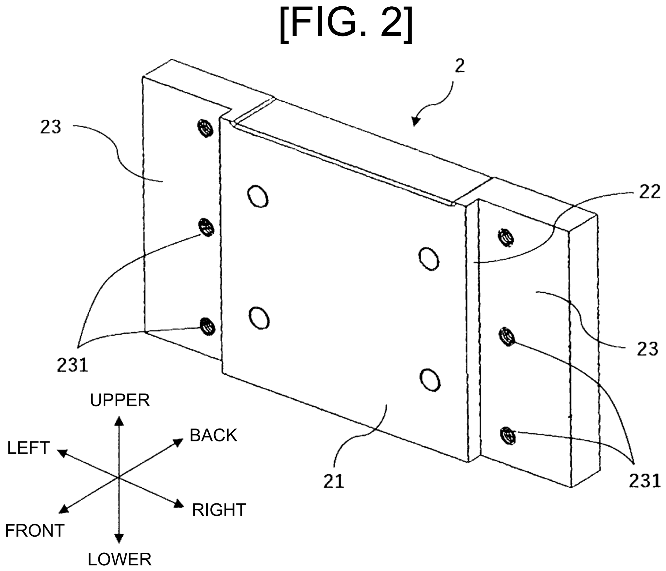

FIG. 2 is a perspective view of the end plate. As illustrated in FIG. 1, the end plates 2 are respectively located on a front side and a back side in the front-back direction of the plurality of energy storage devices 1. However, since the two end plates 2 are the same, the end plate 2, which is in contact with the energy storage device 1 located on the front side, will be described with reference to FIG. 2.

As illustrated in FIG. 2, the end plate 2 is formed in a flat rectangular parallelepiped shape having a short length in the front-back direction. A length of the end plate 2 in the left-right direction is substantially the same as that of the energy storage device 1 in the left-right direction. As illustrated in FIG. 1, the length of the end plate 2 in the upper-lower direction is shorter than that of the energy storage device 1 in the upper-lower direction. A surface of the end plate 2 on the back side in the front-back direction is formed to be flat, and is opposed to the energy storage device 1. The surface of the end plate which is opposed to the energy storage device is formed to be flat.

In the end plate 2, a pair of end plate connecting portions 23 are formed on both sides in the left-right direction. The end plate connecting portion 23 is a part to which the side plate 3 is connected. A plurality of (three in the present embodiment) screw holes 231 which are aligned in the upper-lower direction are formed in each of the end plate connecting portions 23. The screw hole 231 is also referred to as an end fixing portion fixed to the side plate 3.

A raised portion 21 having a rectangular shape in a front view is formed between the pair of end plate connecting portions 23. In other words, on the front side of the end plate 2 in the front-back direction, the raised portion 21 is formed in an area including a central portion of a surface thereof in the left-right direction. A thickness of the raised portion 21 is formed to be greater than that of the end plate connecting portion 23 in the first direction. The raised portion 21 extends from a lower end to an upper end of the end plate 2 in the upper-lower direction. The end plate connecting portion 23 whose surface is flat is formed on both sides of the raised portion 21 in the left-right direction via a step 22. A second part 32 of the side plate 3, which will be described later, can be located in a recess formed by the step 22. The end plate 2 may be made of metal. By the presence of the raised portion 21, it is possible to increase the thickness of the end plate in the front-back direction, and the strength of the end plate can be improved.

### <5. Side Plate>

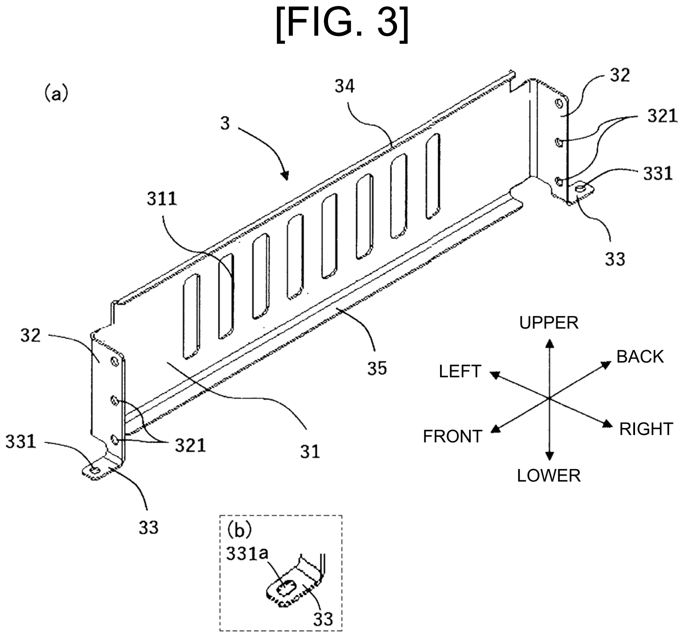

In the present embodiment, while a pair of side plates 3 are used, the side plates 3 have a bilaterally symmetrical shape. Thus, the side plate 3 which is located on the left side of the energy storage apparatus 100 will be described. FIG. 3 is a perspective view of the side plate which is located on the left side.

As illustrated in FIG. 3, the side plate 3 is formed by bending a single sheet of metal plate and includes: a first part 31, which is of a rectangular shape, extending in the front-back direction; the second part 32, which is of a rectangular shape, joined to each of both ends of the first part 31 in the front-back direction and extending in the left-right direction; and a third part 33 which is joined to a lower end of each of the second parts 32 in the upper-lower direction. A fourth part 34 and a fifth part 35 extending to the right side in the left-right direction are respectively joined to the both ends of the first part 31 in the upper-lower direction.

The first part 31 is a plate-like part which is located in the left-right direction of the plurality of energy storage devices 1, and a plurality of through holes 311 extending in the upper-lower direction are formed at predetermined intervals from each other in the front-back direction. Cooling air can be applied to the energy storage devices 1 via the through holes 311.

The second part 32 is joined to an end portion of the first part 31 in the front-back direction. That is, the second part 32 is a plate-like part which is bent in the left-right direction (second direction) from the end portion of the first part 31 and extends in the left-right direction. The second part 32 is connected to the end plate connecting portion 23 of the end plate 2. The second part 32 is formed in such a shape that conforms to a surface of the end plate connecting portion 23 of the end plate 2, and is fixed such that the second part 32 is in contact with the end plate connecting portion 23. Therefore, a plurality of (three in the present embodiment) through holes 321 which are aligned in the upper-lower direction are formed in an end portion of the second part 32 in the left-right direction. These through holes 321 are formed at positions corresponding to the screw holes 231 of the end plate 2. The through hole 321 is also referred to as a first side fixing portion fixed to the end plate 2. The through hole (first side fixing portion) 321 of the side plate 3 and the screw hole (end fixing portion) 231 of the end plate 2 are fixed by a bolt.

A length of the second part 32 in the upper-lower direction is shorter than a length of the first part 31 in the upper-lower direction. The length of the second part 32 in the upper-lower direction is substantially the same as the length of the end plate 2 in the upper-lower direction. The lower end of the second part 32 in the upper-lower direction is located at substantially the same height as the lower end of the first part 31 in the upper-lower direction.

The third part 33 is a plate-like part which is bent in a direction along the front-back direction from the lower end of the second part 32 in the upper-lower direction and extends in the front-back direction (first direction). The third part 33 extends along an installation surface 8 on which the energy storage apparatus 100 is to be installed. As indicated in illustration (a) of FIG. 3, a circular through hole 331 is formed in the third part 33, and a bolt (a fixing member) is inserted into the through hole 331. The through hole 331 is also referred to as a second side fixing portion fixed to the installation surface 8. The installation surface 8 is a surface on which the energy storage apparatus 100 is set and fixed. Examples of the installation surface 8 include a floor surface of an energy storage apparatus case which accommodates therein the energy storage apparatus 100, a shelf board of a rack on which the energy storage apparatus is placed, and the like.

The fourth part 34 is a plate-like part which extends along an upper end of the first part 31 in the upper-lower direction, is bent at a right angle from the upper end, and extends in the left-right direction. The fourth part 34 is formed to have a short length in the left-right direction, and comes into contact with the respective upper surfaces of the plurality of energy storage devices 1 in the upper-lower direction. The fifth part 35 is a plate-like part which extends along the lower end of the first part 31 in the upper-lower direction, is bent at a right angle from the lower end, and extends in the left-right direction. The fifth part 35 is formed to have a short length in the left-right direction, and comes into contact with the respective lower surfaces of the plurality of energy storage devices 1 in the upper-lower direction.

### <6. Assembly of Energy Storage Apparatus 100>

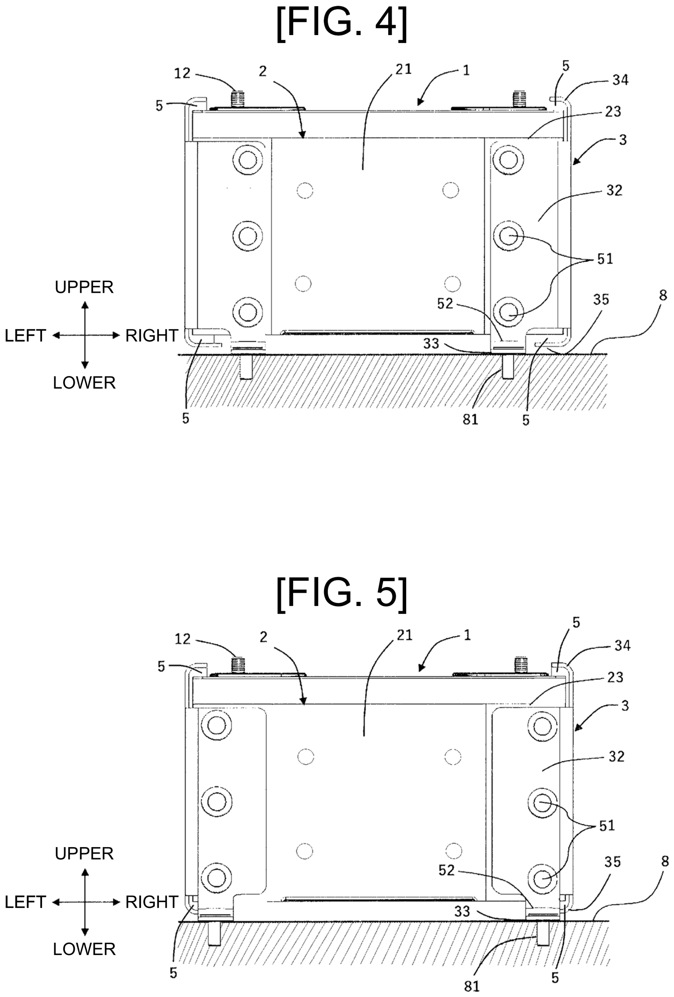

Next, a method of assembling the energy storage apparatus 100 configured as described above will be described. First, the plurality of energy storage devices 1 are located in the front-back direction. Next, the end plates 2 are respectively located at the both ends of the plurality of energy storage devices 1 in the front-back direction. After that, the side plates 3 are respectively attached to the both ends of the plurality of energy storage devices 1 in the left-right direction. Specifically, the plurality of energy storage devices 1 are located between the fourth part 34 and the fifth part 35 of each of the side plates 3. An insulating member 5 is located between the fourth part 34 and the plurality of energy storage devices 1, and between the fifth part 35 and the plurality of energy storage devices 1. As described above, the plurality of energy storage devices 1 are supported by the side plates 3 from the upper side and the lower side in the upper-lower direction. In this connection, the second part 32 of each of the side plates 3 is stacked on the end plate connecting portion 23 of the end plate 2 to be located thereon. Next, as illustrated in FIG. 4, a bolt 51 is inserted into each of the through holes 321 of the second part 32, and is screwed into each of the screw holes 231 of the end plate 2. In this way, the side plate 3 is fixed to the end plate 2. As a result, the plurality of energy storage devices 1 are fixed integrally by the end plates 2 and the side plates 3. The energy storage apparatus 100 is formed by connecting the adjacently located energy storage devices 1 with a bus bar.

As illustrated in FIG. 4, the third part 33 of the side plate 3 is fixed to a screw hole 81 formed in the installation surface 8 on which the energy storage apparatus 100 is installed. Specifically, a bolt 52 is inserted into the through hole (second side fixing portion) 331 of the third part 33, and is screwed into the screw hole 81 of the installation surface 8. The bolt 52 is an example of a fixing member. In this way, the energy storage apparatus 100 is fixed to the installation surface 8.

### <7. Description of Effects>

The energy storage apparatus 100 configured as described above exhibits the following effects.
(1) When the energy storage device 1 swells, the end plate 2 receives a force. If the end plate 2 and the installation surface 8 are fixed by a bolt or the like, a force due to the swelling of the energy storage device 1 directly acts on the bolt. Thus, the bolt may be damaged. In contrast, according to the present embodiment, not the end plate 2 but the third part 33 formed in the side plate 3 and the installation surface 8 are fixed by the bolt 52. Consequently, the force due to the swelling of the energy storage device 1 is prevented from directly acting on the third part 33. Therefore, it is possible to prevent the bolt 52 for fixing the third part 33 and the installation surface 8 from being damaged. In other words, it is possible to suppress occurrence of a problem in the installation state of the energy storage apparatus 100.
(2) The side plate 3 is formed of a single sheet of plate material, and the first part 31, the second part 32, and the third part 33 are formed by bending such a plate material. Since the side plate 3 can be formed by bending the single sheet of plate material, the side plate 3 can be easily manufactured.
(3) The thickness of the raised portion 21 of the end plate 2 in the front-back direction (first direction) is greater than that of the end plate connecting portion 23. By virtue of this feature, the end plate 2 has an increased thickness in the front-back direction at a part which receives the force due to the swelling of the energy storage device, and thus, deformation of the end plate 2 can be suppressed. The third part 33 is less likely to be affected by the swelling of the energy storage device. Therefore, it is possible to reduce the risk of the force due to the swelling of the energy storage device 1 affecting the bolt 81 for fixing the energy storage apparatus 100 onto the installation surface 8. Since the second part 32 of the side plate 3 is fixed by being stacked on the end plate 2, the second part 32 also contributes to the suppression of the deformation of the end plate 2.
(4) The energy storage device 1 swells in the front-back direction. The second part 32 of the side plate 3 is fixed to the end plate 2 in the front-back direction. Since the second part 32 is fixed by being stacked on the end plate connecting portion 23 of the end plate 2, the second part 32 is less likely to be affected by the swelling of the energy storage device.

### <8. Modifications>

Although one embodiment of the present invention has been described above, the present invention is not limited to this embodiment, and various changes can be made to the embodiment on condition that the changes do not depart from the spirit of the present invention. The following modifications can be combined with the above-described embodiment, and the modifications can also be combined with each other as appropriate.
(1) It is sufficient if the side plate 3 includes at least the first part 31 extending in the front-back direction, the second part 32 fixed to the end plate 2, and the third part 33 fixed to the installation surface 8. The shape of the respective parts is not particularly limited. Therefore, the fourth part 34 and the fifth part 35 are not necessarily required, and may be provided if necessary.
(2) In the above-described embodiment, the side plate 3 is formed by bending a single sheet of plate material. However, the side plate 3 may alternatively be formed by combining a plurality of members. For combining (connecting) the plurality of plate materials, welding or riveting may be used apart from screwing.
(3) The shape of the through hole 331 formed in the third part 33 of the side plate 3 is not particularly limited, and may be a long hole extending in the front-back direction (first direction) as indicated in illustration (b) of FIG. 3. By this shape, the position of the bolt 52 can be moved within a long hole 331a. Since the plurality of energy storage devices 1 are arrayed in the front-back direction, the energy storage apparatus 100 is long in the front-back direction. A dimensional tolerance of a position of the energy storage apparatus 100 to be fixed to the installation surface is increased. Therefore, if the through hole is a long hole, the screw hole 81 of the installation surface 8 and the long hole 331a can be fixed by the bolt 52 by absorbing the tolerance.
(4) A method of fixing the third part 33 to the installation surface 8 is not particularly limited, and various modes using means other than the bolt 52 are possible. That is, it is sufficient if the third part 33 and the installation surface 8 can be fixed. Examples of the fixing method not using a bolt include welding and riveting.
(5) In the above-described embodiment, the third part 33 is provided at a position distant from the first part 31 in the left-right direction. (The third part 33 is provided at a position closer to a center of the end plate 2 in the left-right direction and near the raised portion 21.) However, the position of the third part 33 is not particularly limited. As illustrated in FIG. 5, the third part 33 can be provided near the first part 31 in the second part 32. This structure brings about the following advantages.
   If the energy storage device 1 swells, it is possible that a vicinity of the center of the end plate 2 may be particularly deformed. However, if the third part 33 is provided at a position near the first part 31, in other words, at a position distant in the left-right direction from the central portion of the end plate 2, the third part 33 is less likely to be affected by the deformation of the end plate 2. Thus, it is possible to reduce the influence that the deformation of the end plate 2 exerts on the strength of fixing between the third part 33 and the installation surface 8.
(6) The shape of the end plate 2 is not particularly limited as long as the end plate 2 can be located to be directly or indirectly in contact with the energy storage devices 1 at the both ends in the front-back direction, and can fix the second part 32 of the side plate 3. In the above-described embodiment, the raised portion 21 is provided at the center of the end plate 2. However, the shape of a front surface of the end plate 2 is not particularly limited as long as the second part 32 of the side plate 3 can be fixed thereto as described above. That is, a mode in which no raised portion 21 is provided is also possible. The thickness of the end plate 2 is also not particularly limited, and the end plate 2 may be plate-shaped likewise the side plate 3.
(7) The configuration of the energy storage device 1 is not particularly limited, and a configuration of a known energy storage device can be adopted. For example, the energy storage device 1 may have a long cylindrical shape instead of a rectangular parallelepiped shape. The energy storage device 1 may have a pouch shape.
(8) In the above-described embodiment, the end plate 2 is a thick metal member having no hollow portion except for the through hole. However, the end plate 2 is not limited this configuration. The end plate may be entirely or partially shaped like a lattice. Since empty spaces are formed within the lattice, the weight of the end plate can be reduced. In this connection, the end plate is also provided with rigidity by virtue of the lattice shape. The end plate 2 may be a metal member having unevenness.

### INDUSTRIAL APPLICABILITY

The present invention can be applied to an energy storage apparatus 100 provided with an energy storage device such as a lithium-ion secondary battery.

### DESCRIPTION OF REFERENCE NUMERALS

1 Energy storage device
2 End plate
21 Raised portion
23 End plate connecting portion
3 Side plate
31 First part
32 Second part
33 Third part
8 Installation surface
100 Energy storage apparatus

## Claims

1. An energy storage apparatus comprising:
a plurality of energy storage devices aligned in a first direction;
an end plate located at an end portion of the plurality of energy storage devices in the first direction; and
a side plate located at an end portion of the plurality of energy storage devices in a second direction intersecting the first direction, wherein
the end plate includes an end plate connecting portion connected to the side plate, and
the side plate includes:
a first part which extends in the first direction;
a second part which extends from the first part in the second direction and is connected to the end plate connecting portion; and
a third part which extends from the second part in the first direction along an installation surface of the energy storage apparatus and is fixed to the installation surface.

2. The energy storage apparatus according to claim 1, wherein the side plate is formed of a single sheet of plate material, and the first part, the second part, and the third part are formed by bending the plate material.

3. The energy storage apparatus according to claim 1, wherein a long hole into which a fixing member, which is for fixing the installation surface and the third part, is inserted is formed in the third part.

4. The energy storage apparatus according to claim 1, wherein the third part is provided near the first part in the second direction.

5. The energy storage apparatus according to claim 1, wherein the end plate includes a raised portion which is located adjacent to the end plate connecting portion, and a thickness of the raised portion is greater than a thickness of the end plate connecting portion in the first direction.
